# EUROPÄISCHE PATENTSCHRIFT

(11) **EP 1 935 540 B1**
(45) Veröffentlichungstag und Bekanntmachung des Hinweises auf die Patenterteilung: **22.02.2017**
(21) Anmeldenummer: 07122963.7
(22) Anmeldetag: 12.12.2007
(51) Int. Cl.: B23B 51/00, B23K 31/02, B23B 27/18, B23K 1/00, E21C 35/18

(54) **Drehschlagbohrer mit Hartstoffeinsatz**
Rotary percussion drill bit with a hard material insert
Foret de percussion avec une plaquette de matière dure

(30) Priorität: 22.12.2006 DE 102006035306
(43) Veröffentlichungstag der Anmeldung: 25.06.2008
(73) Patentinhaber: HILTI Aktiengesellschaft, 9494 Schaan (LI)
(72) Erfinder: Koch, Olaf, 86916 Kaufering (DE); Höggerl, Klaus, 86923 Finning (DE)
(74) Vertreter: Hilti Aktiengesellschaft Corporate Intellectual Property

(56) Entgegenhaltungen:
- WO-A1-98/35126
- DE-A1- 4 419 641
- DE-A1-102006 000 201
- US-A- 2 308 569
- US-A- 4 941 711

## Beschreibung

Die Erfindung bezeichnet einen Drehschlagbohrer mit einem angelöteten Hartstoffeinsatz, insbesondere im Durchmesserbereich von 4 mm bis 45 mm zur Verwendung mit drehschlagenden Handwerkzeugmaschinen.

Üblicherweise sind derartige Drehschlagbohrer für drehschlagende Handwerkzeugmaschinen im Schaftende mit einer meisselförmigen Hartmetallplatte bestückt, die axial bodenseitig sowie über zwei gegenüberliegende seitliche Befestigungsflächen in einen sich diametral durch das Schaftende erstreckenden Aufnahmeschlitz hart eingelötet ist. Durch die beim Fügen und Schlagbohren auftretenden hohen Temperaturunterschiede normal zur Achsrichtung kommt es vermittelt durch unterschiedliche Temperaturausdehnungskoeffizienten des Hartstoffeinsatzes und des Schaftendes zu hohen Eigenspannungen, besonders innerhalb des diese stoffschlüssig verbindenden Hartlots, was zum Versagen führen kann. Prinzipiell erhöht eine geringe Dicke des Hartlotes zwar die Verbundfestigkeit des stoffschlüssigen Verbundes, belässt aber auch hohe Eigenspannungen im Hartlot und Hartstoffeinsatz.

Nach der DE10208631 weist ein plattenförmiger Hartstoffeinsatz mit einer den Schneidkanten gegenüberliegenden Bodenfläche und zwei quer dazu angeordneten Befestigungsflächen, zwischen der axialen Bodenfläche und den seitlichen Befestigungsflächen jeweils Fasen auf, die den Innenkanten des Aufnahmeschlitzes des Schaftendes zugeordnet sind. Die beiden zur axialen Bodenfläche und den seitlichen Befestigungsflächen senkrechten Freiflächen gehen ohne Fasen in die Bodenfläche über. Nach der DE4419641 ist ein kompakter Hartstoffeinsatz mit Schneidkanten bekannt, der über die den Schneidkanten gegenüberliegende Bodenfläche ohne Fase stumpf auf die Grundfläche des Bohrerschafts aufgelötet ist.

Die DE4419641 offenbart einen Drehschlagbohrer gemäss dem Oberbegriff des Anspruchs 1.

Nach der DE4442266 ist ein kreuzartiger Hartstoffeinsatz mit einer in der axialen Bodenfläche gleichförmig umlaufenden Fase gleicher Breite bekannt.

Nach der DE10006936 ist ein zum Bohren von armiertem Beton optimierter Drehschlagbohrer mit einem X-förmigen Hartstoffeinsatz aus Sinterwerkstoff bekannt, der im Schaftende über zwei diametrale seitliche Befestigungsflächen und der axialen Bodenfläche in einer passenden X-förmigen Verzapfung eingelötet und im Sektor zweier diametraler Freiflächen über die Bodenfläche stumpf auf die axiale Grundfläche des Schaftendes aufgelötet ist.

Die Aufgabe der Erfindung besteht in der Realisierung eines Drehschlagbohrers mit weiter verbesserter Standzeit beim Bohren von armiertem und unarmiertem Beton.

Die Aufgabe wird im Wesentlichen durch die Merkmale des Anspruchs 1 gelöst. Vorteilhafte Weiterbildungen ergeben sich aus den Unteransprüchen.

So weist ein Drehschlagbohrer einen Hartstoffeinsatz mit zumindest einer Schneidkante und einer der Schneidkante gegenüberliegenden Bodenfläche auf, welche mit einem Hartlot stoffschlüssig an einer axialen Grundfläche im Schaftende befestigt ist, wobei die Grundfläche zumindest am äusseren Radialrand angefast ist.

Durch die an der Grundfläche am äusseren Radialrand ausgebildete Radialfase erstreckt sich bei der Hartverlötung das Hartlot über einen keilförmigen Radialrandbereich. Wie sich mit entsprechenden Simulationen nach der Finite-Elemente-Methode (FEM) zeigen lässt, weist dadurch die von-Mises Vergleichsspannung sowie der hydrostatische Spannungszustand, welche bei Hartlot als Versagenskriterium betrachtet werden kann, keine Extremwerte am Rand auf, wo es bevorzugt zur Rissinitiierung kommt. Zudem dient der keilförmige Radialrandbereich zur definierten Aufnahme sowie zum Ausgleich von während der Massenproduktion bei der Hartverlötung geringfügig tolerierenden Hartlotmengen.

Vorteilhaft ist die axiale Dicke des zwischen der Grundfläche und der Bodenfläche angeordneten Hartlots überall kleiner 0,6 mm, wodurch die Verbundfestigkeit des stoffschlüssigen Verbundes hinreichend hoch ist.

Vorteilhaft sind bei einem X-förmigen Hartstoffeinsatz mit vier sich radial ersteckenden Flügeln, der in einer passenden X-förmigen Verzapfung eingelötet und im Sektor zweier diametraler Freiflächen über die Bodenfläche stumpf auf die axiale Grundfläche des Schaftendes aufgelötet ist, die Radialfase für jeden Flügel ausgebildet. Dabei können die einzelnen Radialfasen gleichartig oder unterschiedlich ausgeformt sein.

Vorteilhaft sind im Sektor zweier diametraler Freiflächen im radialen Mittelbereich zwischen je zwei umfänglich benachbarten Flügeln zwei Zusatzradialfasen ausgebildet, wodurch im Sektor zweier diametraler Freiflächen ein relativ grosses Aufnahmevermögen für tolerierende Hartlotmengen besteht, ohne dass Hartlot radial herausquellt, wodurch der Abtransport abrasiv abgetragenen Bohrkleins und somit der Bohrfortschritt verbessert wird.

Die Erfindung wird bezüglich eines vorteilhaften Ausführungsbeispiels näher erläutert mit:
- Fig. 1: als Drehschlagbohrer im Längsschnitt nach Ebene I-I in Fig. 2
- Fig. 2: als Aufsicht des Schaftendes ohne Hartstoffeinsatz nach Ebene II-II in Fig. 1
- Fig. 3: als Variante
- Fig. 4: im Querschnitt nach Ebene IV-IV in Fig. 3
- Fig. 5: als Aufsicht des Schaftendes ohne Hartstoffeinsatz nach Pfeil V in Fig. 4
- Fig. 6: im Längsschnitt nach Ebene VI-VI in Fig. 5
- Fig. 7: im Längsschnitt nach Ebene VII in Fig. 5
- Fig. 8: im Längsschnitt nach Ebene VIII-VIII in Fig. 5

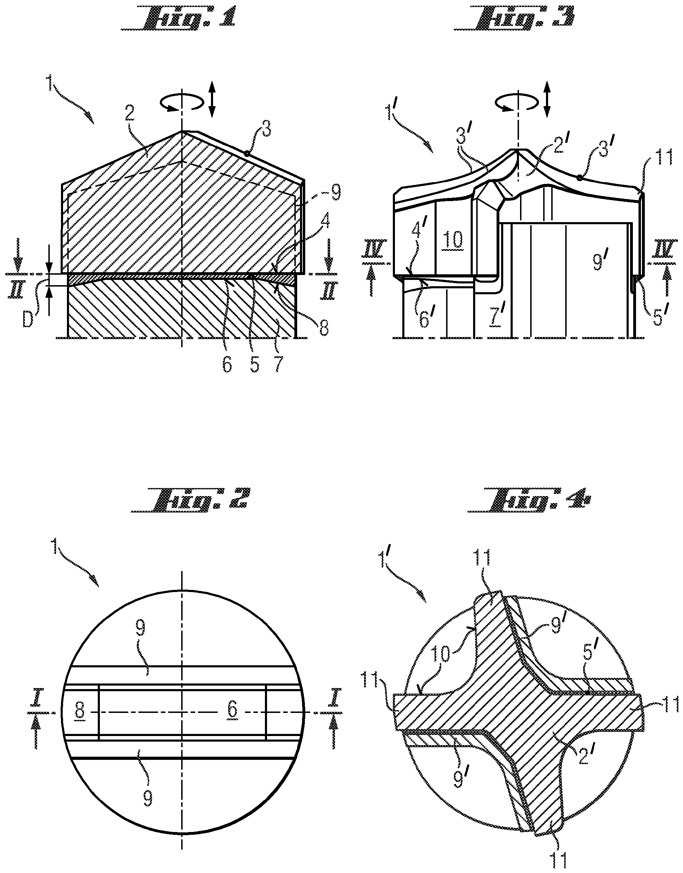

Nach den Fig. 1 und 2 weist ein Drehschlagbohrer 1 einen plattenförmigen Hartstoffeinsatz 2 mit einer sich diametral erstreckenden Schneidkante 3 und einer dieser gegenüberliegenden Bodenfläche 4 auf, welche mit einem Hartlot 5 stoffschlüssig an einer axialen Grundfläche 6 in einer passenden schlitzförmigen Verzapfung 9 im Schaftende 7 befestigt ist. Die Grundfläche 6 ist diametral beidseitig am äusseren Radialrand mit einer Radialfase 8 angefast. Die axiale Dicke D des zwischen der Grundfläche 6 und der Bodenfläche 4 angeordneten Hartlots 5 ist überall kleiner 0,6 mm.

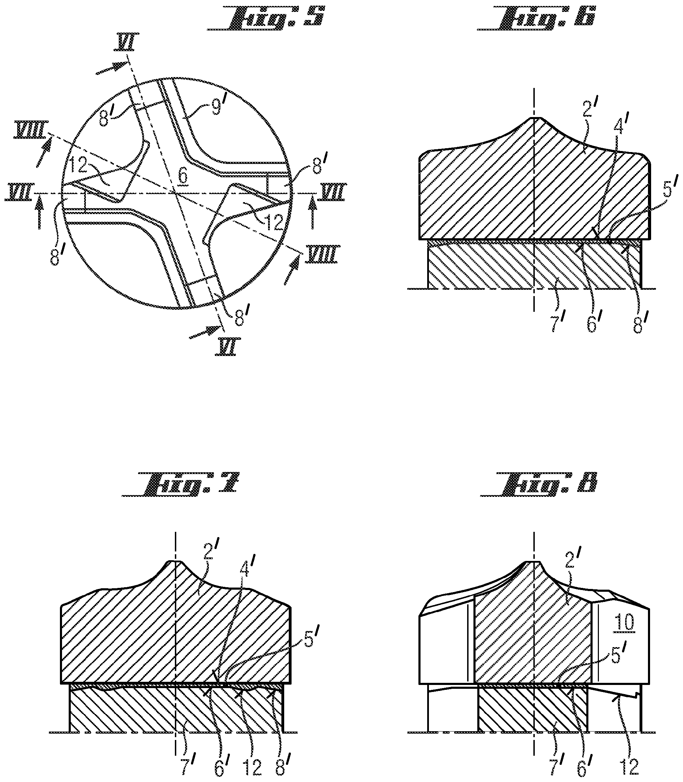

Nach den Fig. 3 bis 8 ist bei einem Drehschlagbohrer 1' ein X-förmiger Hartstoffeinsatz 2' mit vier sich radial ersteckenden Flügeln 11 mit Schneidkanten 3' vorhanden. Der Hartstoffeinsatz 2' ist mit Hartlot 5' in einer passenden X-förmigen Verzapfung 9' eingelötet und im Sektor zweier diametraler Freiflächen 10 über die Bodenfläche 4' stumpf auf die axiale Grundfläche 6' des Schaftendes 7' aufgelötet. Für jeden Flügel 11 ist je eine Radialfase 8' ausgebildet. Im Sektor zweier diametraler Freiflächen 10 im radialen Mittelbereich zwischen je zwei umfänglich benachbarten Flügeln 11' sind zwei Zusatzradialfasen 12 ausgebildet.

## Patentansprüche

1. Drehschlagbohrer mit einem Hartstoffeinsatz (2, 2') mit zumindest einer Schneidkante (3, 3') und einer dieser gegenüberliegenden Bodenfläche (4, 4'), welche mit einem Hartlot (5, 5') stoffschlüssig an einer axialen Grundfläche (6, 6') im Schaftende (7, 7') befestigt ist, **dadurch gekennzeichnet, dass** die Grundfläche (6, 6') zumindest am äusseren Radialrand angefast ist, wodurch das Hartlot über einen keilförmigen Radialrandbereich erstreckt ist.

2. Drehschlagbohrer nach Anspruch 1, **dadurch gekennzeichnet, dass** die axiale Dicke (D) des zwischen der Grundfläche (6, 6') und der Bodenfläche (4, 4') angeordneten Hartlots (5, 5') überall kleiner 0,6 mm ist.

3. Drehschlagbohrer nach Anspruch 1 oder 2, **dadurch gekennzeichnet, dass** bei einem X-förmigen Hartstoffeinsatz (2') mit vier sich radial ersteckenden Flügeln (11), der in einer passenden X-förmigen Verzapfung (9') eingelötet und im Sektor zweier diametraler Freiflächen (10) über die Bodenfläche (4') stumpf auf die axiale Grundfläche (6') des Schaftendes (7') aufgelötet ist, für jeden Flügel (11) je eine Radialfase (8') ausgebildet ist.

4. Drehschlagbohrer nach Anspruch 3, **dadurch gekennzeichnet, dass** im Sektor zweier diametraler Freiflächen (10) im radialen Mittelbereich zwischen je zwei umfänglich benachbarten Flügeln (11) zwei Zusatzradialfasen (12) ausgebildet sind.

## Claims

1. Rotary percussion drill bit with a hard material insert (2, 2'), comprising at least one cutting edge (3, 3') and a bottom surface (4, 4') opposite thereto which is fixed with a hard solder (5, 5') in a material joint to an axial base surface (6, 6') in the shaft end (7, 7'), **characterised in that** the base surface (6, 6') is chamfered at least at the outer radial edge, whereby the hard solder extends over a wedge-shaped radial edge region.

2. Rotary percussion drill bit according to Claim 1, **characterised in that** the axial thickness (D) of the hard solder (5, 5') arranged between the base surface (6, 6') and the bottom surface (4, 4') is everywhere less than 0.6 mm.

3. Rotary percussion drill bit according to Claim 1 or 2, **characterised in that,** in the case of an X-shaped hard material insert (2') with four radially extending blades (11) which is soldered into a matched X-shaped mortise (9') and, in the sector of two diametrical flanks (10), is butt-soldered to the axial base surface (6') of the shaft end (7') via the bottom surface (4'), a respective radial chamfer (8') is formed for each blade (11).

4. Rotary percussion drill bit according to Claim 3, **characterised in that,** in the sector of two diametrical flanks (10), two additional radial chamfers (12) are formed in the radially central region between two respective circumferentially adjacent blades (11).

## Revendications

1. Foret rotatif à percussion comportant un insert en matériau dur (2, 2') ayant au moins une arête tranchante (3, 3') et une surface inférieure opposée à celui-ci (4, 4') qui est fixée à une surface de base axiale (6, 6') dans l'extrémité de tige (7, 7') avec un métal d'apport de brasage (5, 5') par une liaison par matière, **caractérisé en ce que** la surface de base (6, 6') est au moins chanfreinée sur le bord radial extérieur, en sorte que le métal d'apport de brasage s'étend sur une zone de bord radial en forme de coin.

2. Foret rotatif à percussion selon la revendication 1, **caractérisé en ce que** l'épaisseur axiale (D) du métal d'apport de brasage (5, 5') agencé entre la surface de base (6, 6') et la surface inférieure (4, 4') est partout inférieure à 0,6 mm.

3. Foret rotatif à percussion selon la revendication 1 ou 2, **caractérisé en ce que** dans un insert en matériau dur en forme de X (2') ayant quatre ailettes (11) s'étendant radialement, qui est brasé dans un assemblage (9') correspondant à tenon et mortaise en forme de X et qui est brasé, dans le secteur de deux surfaces libres diamétrales (10), à la surface inférieure (4') bord à bord avec la surface inférieure (6') de l'extrémité de tige (7'), un chanfrein radial (8') est formé pour chaque ailette (11).

4. Foret rotatif à percussion selon la revendication 3, **caractérisé en ce que** dans le secteur de deux surfaces libres diamétrales (10), dans la zone centrale radiale, sont formés deux chanfreins radiaux supplémentaires (12) entre deux ailettes circonférentielles adjacentes (11) respectives.
